# EUROPEAN PATENT SPECIFICATION

(11) **EP 3 794 708 B1**
(45) Date of publication and mention of the grant of the patent: **19.07.2023**
(21) Application number: 18726952.7
(22) Date of filing: 16.05.2018
(51) Int. Cl.: H02J 50/10, H01R 13/66

(54) **A WIRELESS POWER TRANSFER SYSTEM FOR ELECTRIC VEHICLES**
SYSTEM ZUR DRAHTLOSEN STROMÜBERTRAGUNG FÜR ELEKTROFAHRZEUGE
SYSTÈME DE TRANSFERT DE PUISSANCE SANS FIL POUR DES VÉHICULES ÉLECTRIQUES

(43) Date of publication of application: 24.03.2021
(73) Proprietor: ABB E-mobility B.V., 2629 JG Delft (NL)
(72) Inventor: TOMBELLI, Fabio, 2291 ZJ Wateringen (NL); BLASZCZYK, Pawel, 32-020 Wieliczka (PL); LEGA, Marco, 67047 Rocca di cambio (AQ) (IT); APELDOORN, Oscar, 5426 Lengnau (CH)
(74) Representative: Zimmermann & Partner Patentanwälte mbB
(86) International application number: PCT/EP2018/062771
(87) International publication number: WO 2019/219191

(56) References cited:
- US-A1- 2010 164 296
- US-A1- 2011 175 569
- US-A1- 2016 264 007
- US-A1- 2017 199 229
- US-A1- 2018 086 213

## Description

The present invention relates to the field of power transfer systems for electric vehicles. In particular, the present invention regards an inductive power transfer system capable of exchanging electric power between an electric power system with a battery on board an electric vehicle, in a wireless manner.

Wireless inductive power transfer systems for electric vehicles are well known in the state of the art. Typically, these systems are used to charge the electric battery of an electric vehicle.

When used as battery charging systems, wireless inductive power transfer systems employ a transmitter coil, which is placed on or embedded in a ground surface, to inductively transmit electric power to a receiver coil mounted on board an electric vehicle through the air gap between the road surface and the vehicle itself.

As in traditional transformers, an AC current flowing in the winding of the transmitter coil produces a magnetic flux making an induced AC current to flow in the winding of the receiver coil. In this way, electric power may be inductively transferred from the transmitter coil to the receiver coil.

When used as battery charging systems, wireless power transfer systems for electric vehicles typically comprise a transmitter-side section and a receiver-side section. The transmitter-side section normally includes the transmitter coil and a power supply system connectable to the mains to feed the transmitter coil. The receiver-side section normally includes, on board the electric vehicle, the receiver coil and a power conversion system to feed the battery with electric power inductively received by the receiver coil.

Both the transmitter-side section and the receiver-side section of the power transfer system include a number of controllers to control their operation. Controllers arranged at different sections can mutually communicate through a dedicated communication channel, which is typically a wireless communication channel, e.g. of the Wi-Fi^{™} type.

In order to ensure a suitable charging process of the battery on board the electric vehicle, electric power transferred to the battery has to be properly controlled according to a battery charging profile that is typically set-up depending on the characteristics and state-of-charge of the battery and on other additional aspects, such as the reduction of the energy generation during a charging cycle, the reduction of the time required for the charging process, and the like.

Power transfer systems of the state of the art have some aspects to improve, particularly in relation to their practicality of installation and maintenance.

Current power transfer systems require complex and time-consuming operations to install the electronic stages, which are electrically coupled with the transmitter coil.

Additionally, possible maintenance interventions may be quite complex and expensive as the above-mentioned transmitter coil and some electric circuits electrically coupled thereto are placed on or embedded in the ground surface.

US2010/164296A1 **discloses a power transfer system for electric vehicles of known type.**

The main aim of the present invention is to provide a wireless power transfer system for electric vehicles, which allows overcoming the above-described disadvantages.

Within this aim, another object of the present invention is to provide a wireless power transfer system ensuring a suitable control of electric power exchanged between the electric power system and the battery on board an electric vehicle, in accordance with a given battery charging profile.

Another object of the present invention is to provide a wireless power transfer system having a remarkable easiness of installation on the field and maintenance.

Another object of the present invention is to provide a wireless power transfer system relatively easy and inexpensive to arrange and produce at industrial level.

The above aim and objects, together with other objects that will be more apparent from the subsequent description and from the accompanying drawings, are achieved by a power transfer system for electric vehicles according to the following claim 1 and the related dependent claims.

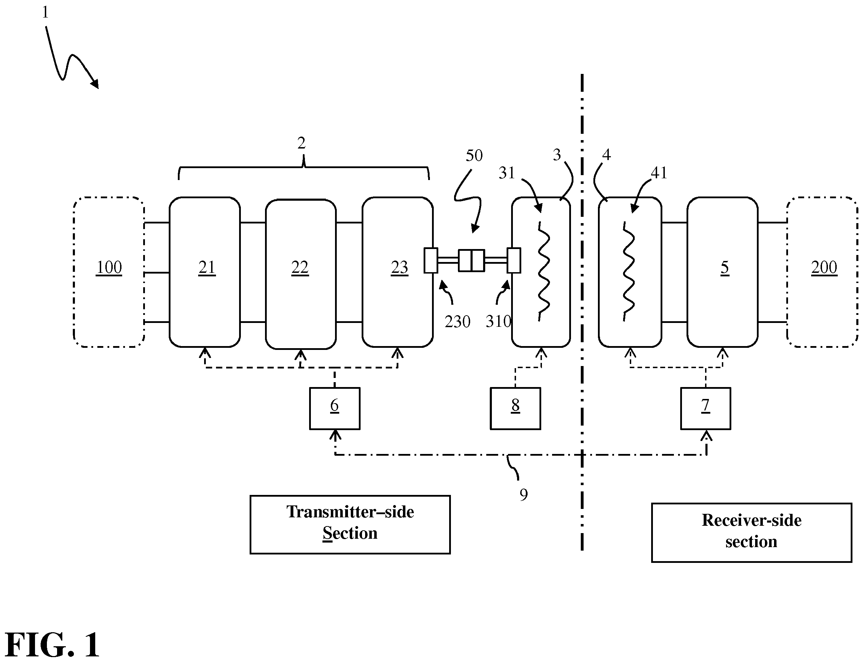

Further characteristics and advantages of the present invention will be more apparent with reference to the description given below and to the accompanying figures, provided purely for explanatory and non-limiting purposes, wherein Figs. 1-3 schematically illustrate the power transfer system, according to the present invention, and some possible embodiments of this latter.

With reference to figure 1, the present invention refers to a power transfer system 1 for electric vehicles capable of exchanging electric power between an electric power system 100 (e.g. the mains) and a battery 200 on board an electric vehicle, in a wireless manner.

The power transfer system 1 is particularly adapted to be used as a battery charging system capable of transferring electric power harvested from the electric power system 100 to the battery 200 and it will be described with specific reference to this application for the sake of simplicity.

However, the power transfer system 1 may be suitable to implement bidirectional power transfer functionalities and therefore it may be employed to transfer electric power from the battery 200 to the electric power system 100.

The power transfer system 1 comprises a transmitter-side section and a receiver-side section, which respectively include a number of sub-systems and components arranged off-board and on-board the electric vehicle.

At the transmitter-side section, the power transfer system 1 comprises a transmitter-side power sub-system 2 electrically coupleable with the electric power system 100 and adapted to exchange AC electric power with this latter.

Preferably, the transmitter-side power sub-system 2 comprises a first AC/DC rectifying stage 21 electrically coupleable with the electric power system 100 to exchange AC electric power. Preferably, the first rectifying stage 21 includes a filter and a switching converter electrically coupled in cascade (not shown).

Preferably, the first rectifying stage 21 includes power switches controllable by means of suitable control signals.

Preferably, the transmitter-side power sub-system 2 further comprises a DC-bus stage 22 electrically coupled with the first rectifying stage 21 to be powered by this latter. Conveniently, the DC-bus stage 22 is adapted to exchange DC electric power with the first rectifying stage 21.

In some embodiments of the invention, the bus-stage 22 may comprise a capacitive circuit (e.g. a so-called DC-link circuit) to suitably store and make available the electric energy received from the rectifying stage 21. In this case, the amplitude of the DC current and voltage provided at the DC bus-stage 22 may be controlled by suitably tuning the duty-cycle of the power switches of the first rectifying stage 21.

In alternative embodiments, the bus-stage 22 may include a DC-DC switching converter (e.g. a buck switching converter) that conveniently includes power switches controllable by means of suitable control signals. In this case, the amplitude of the DC current and voltage provided at the DC bus-stage 22 may be controlled by suitably tuning the duty-cycle of the power switches of the said DC-DC switching converter.

Preferably, the transmitter-side power sub-system 2 further comprises a DC/AC inverter stage 23 electrically coupled with the first DC-bus stage 22.

Conveniently, the inverter stage 23 comprises first electric terminals 230 for electrical connection with other electric or electronic components of the power transfer system 1. Conveniently, an AC current and voltage are provided at the first electric terminal 230.

Preferably, the inverter stage 23 comprises a DC/AC switching converter including power switches controllable by means of suitable control signals. In this way, the frequency of the AC current and voltage provided by the inverter stage 23 may be controlled by suitably tuning the power switches of such an electronic stage.

At the transmitter-side section, the power transfer system 1 comprises a transmitter-side coil sub-system 3 electrically coupled the transmitter-side power sub-system 2 and adapted to exchange AC electric power with this latter.

Preferably, the transmitter-side coil sub-system 3 is electrically coupled with the inverter stage 23.

Preferably, the transmitter-side coil sub-system 3 comprises second electric terminals 310 electrically coupled with the first electric terminals 230 of the inverter stage 23. Conveniently, an AC current and voltage are provided at the second electric terminals 230, 310.

The transmitter-side coil sub-system 3 comprises a transmitter coil 31, which is preferably adapted to receive an AC current provided by the inverter stage 23.

Preferably, the transmitter-side coil sub-system 3 comprises a first resonant capacitor (not shown) electrically coupled (e.g. in series) with the transmitter coil 31 and auxiliary circuits (not shown) operatively associated with the transmitter coil 31, e.g. electronic circuits including temperature sensors, interface electronic circuits and the like.

At the receiver-side section, the power transfer system 1 comprises a receiver-side coil sub-system 4 comprising a receiver coil 41 inductively coupleable with the transmitter coil 31.

When the transmitter coil 31 and the receiver coil 41 are inductively coupled (obviously with an air gap in therebetween), an AC current flowing along the transmitter coil 31 produces a magnetic flux making an induced AC current to flow along the receiver coil 41. In this way, electric power may be inductively exchanged between the transmitter coil 31 and the receiver coil 41.

The receiver-side coil sub-system 4 is thus adapted to exchange AC electric power with the transmitter-side coil sub-system 3.

Due to magnetic coupling losses, electric power is exchanged between the transmitter coil 31 and the receiver coil 41 with efficiency values η < 1.

Preferably, the receiver-side coil sub-system 4 comprises a second resonant capacitor (not shown) electrically coupled (e.g. in series) with the receiver coil 41.

Preferably, the above-mentioned first and second resonant capacitors are designed to form a resonant RLC circuit together with the inductance of transmitter and receiver coils 31, 41 and the equivalent impedance seen at the output terminals of the receiver-side coil sub-system 4.

In this way, by operating the inverter stage 23 so that the AC current flowing along the transmitter coil 31 has a fundamental frequency close or corresponding to the resonant frequency of such a resonant circuit, electric power may be exchanged between the transmitter-side coil sub-system 3 and the receiver-side coil sub-system 4 with high efficiency values, despite of the necessarily large air gap between the transmitter coil 31 and the receiver coil 41.

Additionally, the amplitude of the AC current flowing along the transmitter coil 31 can be reduced or minimized due to nearly-zero phase shift between said current and the first AC voltage V1_{AC}.

Preferably, the receiver-side coil sub-system 4 comprises auxiliary circuits (not shown) operatively associated with the receiver coil 41, e.g. electronic circuits including temperature sensors, interface electronic circuits and the like.

At the receiver-side section, the power transfer system 1 comprises a receiver-side power sub-system 5 adapted to exchange AC electric power with the receiver-side coil sub-system 4.

Preferably, the receiver-side power sub-system 5 comprises a second rectifying stage 51 electrically coupled with the receiver-side coil sub-system 4.

Preferably, the second rectifying stage 51 includes a full-wave diode bridge electrically coupled in cascade with a filter (not shown).

As an alternative embodiment, the second rectifying stage 51 may include a switching converter and a filter (not shown) electrically coupled in cascade to provide a suitable rectification and filtering of the currents and voltages received from the receiver-side coil sub-system 4. In this case, the second rectifying stage 51 may include power switches controllable by means of suitable control signals.

The receiver-side power sub-system 5 is electrically coupleable with the battery 200 and is adapted to exchange DC electric power with this latter.

Preferably, the second rectifying stage 51 is electrically coupleable with the battery 200.

According to the invention, the power transfer system 1 comprises control means 6, 7, 8 to control its operation.

At the transmitter-side section, the power transfer system 1 comprises first control means 6 to control the operation of the transmitter-side power sub-system 2.

As an example, the first control means 6 may include a controller to control the operation of the rectifying stage 21, a controller to control the operation of the bus stage 22 (when including a DC-Dc switching converter), a controller to control the operation of the inverter stage 23.

At the receiver-side section, the power transfer system 1 comprises second control means 7 to control operation of the receiver-side power sub-system 5 and of the receiver-side coil sub-system 4.

As an example, the second control means 7 may include a controller to control the operation of the rectifying stage 51 and a controller to control the operation of the auxiliary circuits included in the receiver-side coil sub-system 4.

Conveniently, the power transfer system 1 comprises a wireless communication channel 9 (e.g. adopting the Wi-Fi^{™} type), through which the first and second control means 6, 7 are capable to mutually communicate.

As a further example, the communication channel 9 may be a communication channel of the PLT (Power Line Technology) type. In this case, high frequency electric signals (e.g. in the range of KHz) inductively exchanged between the transmitter coil 31 and the receiver coil 41 may be suitably transmitted.

Conveniently, the first and second control means 6, 7 are adapted to exchange data and/or commands through the communication channel 9 to implement control functionalities to control operation of the power transfer system, e.g. control functionalities aimed at suitably controlling the exchange of electric power with the battery 200.

Preferably, at the transmitter-side section, the power transfer system 1 comprises third control means 8 to control the operation of the transmitter-side coil sub-system 3.

As an example, the third control means 8 may include a controller to control the operation of the auxiliary circuits included in the transmitter-side coil sub-system 3.

In a preferred practical implementation of the invention, the transmitter-side power sub-system 2 is arranged in a wall-box device for an electric vehicle charging facility, e.g. for residential purposes. Such a wall-box device may conveniently include the first control means 6 operatively associated with the electronic stages of the transmitter-side power sub-system 2. The transmitter-side coil sub-system 3 is arranged or embedded in a ground pad device for an electric vehicle charging facility, e.g. for residential purposes. Such a ground pad device may conveniently include the third control means 8 operatively associated to transmitter-side coil sub-system 3.

The receiver-side coil sub-system 4, the receiver-side power sub-system 5 and the second control means 7 are arranged (together with the battery 200) on board an electric vehicle.

According to the invention, the power transfer system 1 comprises connection means 50 adapted to electrically couple the transmitter-side power sub-system 2 and the transmitter-side coil sub-system 3.

The connection means 50 comprises at least a pair of first and second connecting elements 51, 52 coupleable by means of a removable coupling of the tool-less type.

For the sake of clarity, it is specified that the definition "removable coupling of the tool-less type" refers to a coupling that does not need for tools for being realized or removed, in other words a coupling that may be realized or removed through a manual intervention of an operator.

According to preferred embodiments of the invention, the first and second connecting elements 51, 52 are coupleable by means of a removable coupling of the plug/socket type.

Preferably, the first connecting element 51 comprises a first power bus 517 (which may be of known type, e.g. of the Litz type) including one or more power conductors electrically coupled with corresponding power conductors of the transmitter-side power sub-system 2, more particularly of the inverter stage 23 (e.g. at the terminals 230 of this latter).

Preferably, the first connecting element 51 comprises first power connectors 513 (which may be of known type) electrically coupled with the first power bus 517, more particularly with the power conductors of this latter.

Preferably, the first connecting element 51 comprises a first communication bus 518 (which may be of known type, e.g. of the CAN type) including one or more bus conductors electrically coupled with corresponding bus conductors of the transmitter-side power sub-system 2, more particularly of the inverter stage 23. In this way, the first communication bus 518 may be operatively coupled with the first control means 6.

Preferably, the first connecting element 51 comprises first bus connectors 514 (which may be of known type) electrically coupled with the first communication bus 518, more particularly with the bus conductors of this latter.

Preferably, the first connecting element 51 comprises one or more first coupling surfaces 511 for mechanically coupling said connecting element with another body.

Preferably, the second connecting element 52 comprises a second power bus 527 (which may be of known type, e.g. of the Litz type) including one or more power conductors electrically coupled with corresponding power conductors of the transmitter-side coil sub-system 3 (e.g. at the terminals 310 of this latter).

Preferably, the second connecting element 52 comprises second power connectors 523 electrically coupled with the second power bus 527, more particularly with the power conductors of this latter.

Preferably, the first connecting element 51 comprises a second communication bus 528 (which may be of known type, e.g. of the CAN type) including one or more bus conductors electrically coupled with corresponding bus conductors of the transmitter-side coil sub-system 3. In this way, the second communication bus 528 may be operatively coupled with the third control means 8.

Preferably, the second connecting element 52 comprises second bus connectors 524 (which may be of known type) electrically coupled with the second communication bus 528, more particularly with the bus conductors of this latter.

Preferably, the second connecting element 52 comprises one or more second coupling surfaces 521 for mechanically coupling said connecting element with another element.

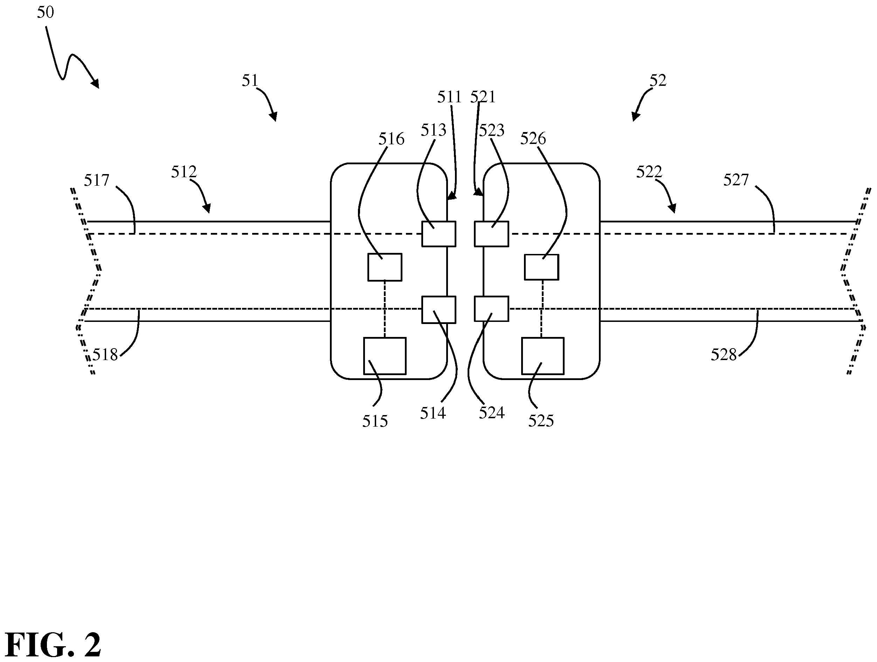

According to some embodiments of the invention (figure 2), the first and second connecting elements 51, 52 are directly coupleable one with another.

In this case, the first power connectors 513 of the first connecting element 51 are coupleable with the second power connectors 523 of the second connecting element 52 whereas the first bus connectors 514 of the first connecting element 51 are coupleable with the second bus connectors 524 of the second connecting element 52.

In addition, the first coupling surfaces 511 of the first connecting element 51 are coupleable with the second coupling surfaces 521 of the second connecting element 52.

In accordance with the invention, the power connectors 513, 523 are electrically coupleable by means of a coupling that does not require tools for being realized, preferably a coupling of the plug/socket type.

Similarly, the bus connectors 514, 524 are electrically coupleable by means of a coupling that does not require tools for being realized, preferably a coupling of the plug/socket type.

As to the coupling surfaces 511, 521, they are mechanically coupleable by means of a removable coupling that does not require tools for being realized, e.g. a shape-coupling or a coupling of the snap-fit type.

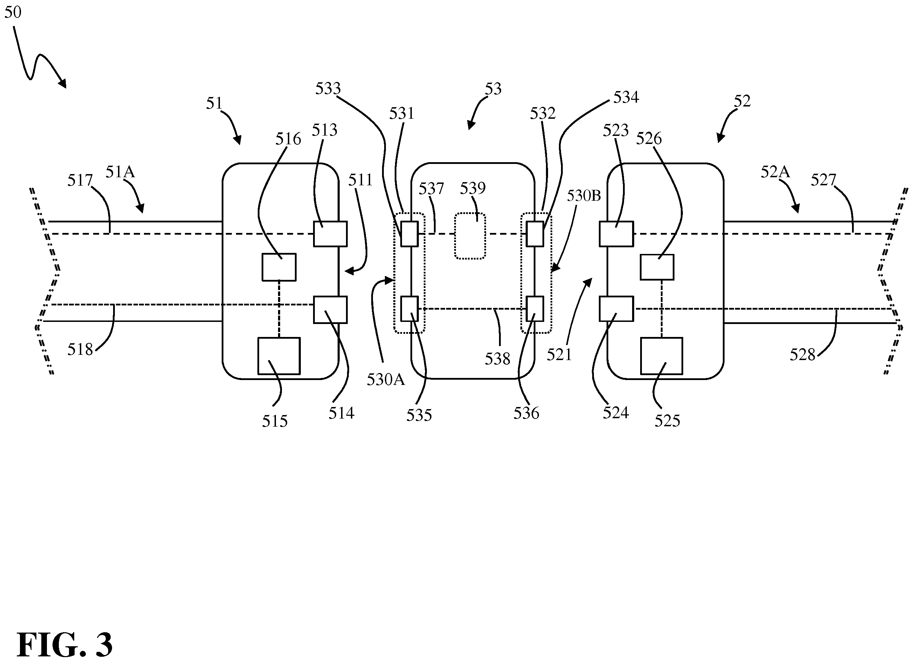

According to other embodiments of the invention (figure 3), the connection means 50 comprise an adapter element 53 having first and second coupling ports 531, 532 and the first and second connecting elements 51, 52 are coupleable with the first and second ports 531, 532 of such an adapter element, respectively. In practice, in this case, the first and second connecting elements 51, 52 are indirectly coupleable one with another through the adapted element 53.

Preferably, the adapter element 53 comprises a third power bus 537 (which may be of known type) including one or more power conductors.

Preferably, at the first and second coupling ports 531, 532, the adapter element 53 comprises one or more pairs of third and fourth power connectors 533, 534 (which may be of known type). Each pair of power connectors 533, 534 is conveniently electrically coupled with a corresponding power conductor of the third power bus 537.

Preferably, the adapter element 53 comprises a third communication bus 538 (which may be of known type) including one or more bus conductors.

Preferably, at the first and second coupling ports 531, 532, the adapter element 53 comprises one or more pairs of third and fourth bus connectors 535, 536 (which may be of known type). Each pair of bus connectors electric connectors 535, 536 is conveniently electrically coupled with a corresponding bus conductor of the third communication bus 538.

Preferably, at the first and second coupling ports 531, 532, the adapter element 53 comprises third and fourth coupling surfaces 530A, 530B for mechanically coupling said adapted element with other elements.

According to these embodiments of the invention, the first power connectors 513 of the first connecting element 51 are coupleable with the third power connectors 533 of the adapter element 53, at the first coupling port 531 of this latter, whereas the second power connectors 523 of the second connecting element 52 are coupleable with the fourth power connectors 534 of the adapter element 53, at the second coupling port 532 of this latter.

Similarly, the first bus connectors 514 of the first connecting element 51 are coupleable with the third bus connectors 535 of the adapter element 53, at the first coupling port 531 of this latter, whereas the second bus connectors 524 of the second connecting element 52 are coupleable with the fourth bus connectors 536 of the adapter element 53, at the second coupling port 532 of this latter.

Additionally, the first coupling surfaces 511 of the first connecting element 51 are coupleable with the third coupling surfaces 530A of the adapter element 53, at the first coupling port 531 of this latter, whereas the second coupling surfaces 521 of the second connecting element 52 are coupleable with the fourth coupling surfaces 530B of the adapter element 53, at the second coupling port 532 of this latter.

In accordance with the invention, the power connectors 513, 533 and 523, 534 are electrically coupleable by means of a removable coupling that does not require tools for being realized, preferably a coupling of the plug/socket type.

Similarly, the bus connectors 514, 535 and 524, 536 are electrically coupleable by means of a removable coupling that does not require tools for being realized, preferably a coupling of the plug/socket type.

As to the coupling surfaces 511, 530A and 521, 530B, these latter are coupleable by means of a removable coupling that does not require tools for being realized, e.g. a shape-coupling or a coupling of the snap-fit type.

Preferably, the adapter element 53 comprises an impedance adapter circuit 539 electrically coupled with the third power bus 537. In this way, the adapter element 53 is capable of providing an impedance matching between the electric circuits connected thereto, namely between the assembly formed by the first connecting element 51 and the transmitter-side power sub-system 2 on one side and the assembly formed by the second connecting element 52 and the transmitter-side coil sub-system 3 on the other side. This solution facilitates the installation or maintenance of power transfer system 1 as the adapter element 53 may be suitably changed depending on the equivalent electric impedances of the electric parts electrically connectable thereto.

According to the invention, the connection means 50 comprise one or more transceiver units 515, 525 capable of communicating with the first control means 6.

The first connecting element 51 comprises a first transceiver unit 515 capable of communicating with the first control means 6.

Conveniently, the first transceiver unit 515 is adapted to transmit information related to the operative conditions of the first connecting element 51 and/or of the second connecting element 52 and/or of the transmitter-side coil sub-system 3 to the first control means 6.

Such information related to the operative conditions of the first connecting element 51 may include data indicative of the operating temperature of the first connecting element 51 and/or data indicative of whether the connectors 513, 514 of the first connecting element 51 are correctly coupled with the corresponding connectors 523, 524 of the second connecting element 52 or with the corresponding connectors 533, 535 of the adapter element 53.

Such information related to the operative conditions of the second connecting element 52 and/or of the transmitter-side coil sub-system 3 to the first control means 6 may include information received from of the second connecting element 52 and/or of the transmitter-side coil sub-system 3 and routed to the control means 6 by the control unit 515.

According to some embodiments of the invention, the first transceiver unit 515 may be capable of communicating in a wireless manner with the first control means 6. In this case, the power transfer system 1 comprises a further wireless communication channel (e.g. of the Wi-Fi^{™} or RFID type), through which the first transceiver unit 515 and the first control means 6 can communicate.

According to other embodiments of the invention, for example when the first communication element 51 comprises the first communication bus 518, the first transceiver unit 515 may be capable of communicating with the first control means 6 in a wired manner through the first communication bus 518.

Preferably, the first connecting element 51 comprises a first sensing arrangement 516 operatively coupled with the first transceiver unit 515. Conveniently, the first sensing arrangement 516 is adapted to provide detection signals indicative of the operating conditions of the first connecting element 51. As an example, the first sensing arrangement 516 may include a temperature sensor to detect the operating temperature of the first connecting element 51 and/or a sensor to detect whether the connectors 513, 514 of the first connecting element 51 are correctly coupled with the corresponding connectors 523, 524 of the second connecting element 52 or with the corresponding connectors 533, 535 of the adapter element 53.

The second connecting element 52 comprises a second transceiver unit 525 capable of communicating with the first control means 6 or with the first transceiver unit 515 of the first connecting element 51.

Conveniently, the second transceiver unit 525 is adapted to transmit information related to the operative conditions of the second connecting element 52 and/or of the transmitter-side coil sub-system 3 to the first control means 6 or to the first transceiver unit 515.

Such information related to the operative conditions of the second connecting element 52 may include data indicative of the operating temperature of the second connecting element 52 and/or data indicative of whether the connectors 523, 524 of the second connecting element 52 are correctly coupled with the corresponding connectors 513, 514 of the first connecting element 51 or with the corresponding connectors 534, 536 of the adapter element 53 and/or data indicative of the characteristics of the power bus 527 (Litz cable).

Such information related to the operative conditions of the transmitter-side coil sub-system 3 may relate to the operating characteristics the sub-system, such as electrical capability, nominal switching frequency, maximum admitted airgap between the transmitter coil and the receiver coil, maximum admitted misalignment between the transmitter coil and the receiver coil, and the like..

According to some embodiments of the invention, the second transceiver unit 525 is capable of communicating in a wireless manner with the first control means 6 or with the first transceiver unit 515. In this case, the power transfer system 1 comprises a further wireless communication channel (e.g. of the Wi-Fi^{™} or RFID type), through which the second transceiver unit 525 can communicate with the first control means 6 or the first transceiver unit 515.

According to other embodiments of the invention, for example when the first and second communication elements 51, 52 comprise the first and second communication buses 518, 528, the second transceiver unit 525 is capable of communicating with the first control means 6 or with the first transceiver unit 515 in a wired manner, through the communication buses 518, 528.

Other arrangements are possible and available to the skilled person, according to the needs. Anyway, it is evident from the above how the second transceiver unit 525 can communicate with the first control means 6 in direct manner (i.e. using a dedicated wireless or wired channel) or in an indirect manner (i.e. exchanging information with the first transceiver unit 515 that in turns exchanges information with the control means 6).

Preferably, the second transceiver unit 525 is capable of communicating with the third control means 8.

According to some embodiments of the invention, the second transceiver unit 525 may be capable of communicating in a wireless manner with the third control means 8. In this case, the power transfer system 1 comprises a further wireless communication channel (e.g. of the Wi-Fi^{™} or RFID type), through which the second transceiver unit 525 and the third control means 8 can communicate.

According to other embodiments of the invention, for example when the second communication element 52 comprises the second communication bus 528, the second transceiver unit 525 may be capable of communicating with the third control means 8 in a wired manner through the second communication bus 528.

Preferably, the second connecting element 52 comprises a second sensing arrangement 526 operatively coupled with the second transceiver unit 525. Conveniently, the second sensing arrangement 526 is adapted to provide detection signals indicative of the operating conditions of the second connecting element 52. As an example, the second sensing arrangement 526 may include a temperature sensor to detect the operating temperature of the second connecting element 52 and/or a sensor to detect whether the connectors 523, 524 of the second connecting element 52 are correctly coupled with the corresponding connectors 513, 514 of the first connecting element 51 or with the corresponding connectors 534, 536 of the adapter element 53.

In a practical implementation, the first and second connecting elements 51 and 52 may be conveniently formed by head portions of connection cables 51A, 52A (which may be of known type) electrically coupled in a known manner with the transmitter-side power sub-system 2 and transmitter-side coil sub-system 3, respectively.

Other arrangements are however possible and available to the skilled person, according to the needs.

The power transfer system, according to the invention, allows achieving the intended aims and objects.

Thanks to its innovative connection arrangement between the transmitter-side power sub-system 2 and transmitter-side coil sub-system 3, the power transfer system, according to the invention, can be easily installed on the field.

Additionally, remarkable reduction of time and costs in carrying out maintenance interventions may be achieved.

In the power transfer system, according to the invention, information transmitted to the first control means 6 by the first control 515 or the first connecting element 51 and/or by the second transceiver unit 525 of the second control element 52 may be duly processed to implement suitable control strategies that duly take into account the operative conditions of the first connecting element 51 and/or of the second connecting element 52 and/or of the transmitter-side coil sub-system 3.

This allows achieving improved performances in controlling the power exchanged between the electric power system 100 and the battery 200. Additionally, it provides remarkably advantages when maintenance or retrofitting interventions need to be carried out.

The power transfer system, according to the invention, can be easily arranged and produced at industrial level, at competitive costs with respect to similar systems of the state of the art.

## Claims

1. Power transfer system (1) for exchanging electric power between an electric power system (100) and a battery (200) of an electric vehicle comprising:
- a transmitter-side power sub-system (2) electrically couplable with said electric power system (100) and adapted to exchange AC electric power with said electric power system;
- a transmitter-side coil sub-system (3) electrically coupled with said transmitter-side power sub-system and adapted to exchange AC electric power with said transmitter-side power sub-system, said transmitter-side coil sub-system comprising a transmitter coil (31);
- a receiver-side coil sub-system (4) comprising a receiver coil (41) inductively couplable with said transmitter coil (31), said receiver-side coil sub-system being adapted to exchange AC electric power with said transmitter-side coil sub-system (3);
- a receiver-side power sub-system (5) electrically coupled with said receiver-side coil sub-system (4) and adapted to exchange AC electric power with said receiver-side coil sub-system, said receiver-side power sub-system being electrically couplable with said battery (200) and adapted to exchange DC electric power with said battery;
- first control means (6) adapted to control operation of said transmitter-side power sub-system (2), second control means (7) adapted to control operation of said receiver-side coil sub-system (4), a first communication channel (9) of the wireless type between said first and second control means (7);
- connection means (50) adapted to electrically couple said transmitter-side power sub-system (2) and said transmitter-side coil sub-system (3),
**characterized in that** said connection means comprise first and second connecting elements (51, 52) electrically couplable by means of a removable coupling of the tool-less type,
wherein said first connecting element (51) comprises a first transceiver unit (515) capable of communicating with said first control means (6) and a first sensing arrangement (516) operatively coupled with said first transceiver unit (515), said first sensing arrangement being adapted to provide detection signals indicative of the operating conditions of said first connecting element to the first transceiver unit (515),
wherein said second connecting element (52) comprises a second transceiver unit (525) capable of communicating with said first control means (6) or with said first transceiver unit (515) of said first connecting element (51) and a second sensing arrangement (526) operatively coupled with said second transceiver unit (525), said second sensing arrangement being adapted to provide detection signals indicative of the operating conditions of said second connecting element to the first transceiver unit (515), wherein said second transceiver unit (525) is adapted to transmit information indicative of the operative conditions of said transmitter-side coil sub-system (3) and said second connecting element at least to said first transceiver unit (515),
wherein the information related to the operative conditions of the transmitter-side coil sub-system (3) relate to at least one among: electrical capability, nominal switching frequency, maximum admitted airgap between the transmitter coil and the receiver coil, maximum admitted misalignment between the transmitter coil and the receiver coil, wherein said first transceiver unit (515) is adapted to transmit information indicative of the operative conditions of said first connecting element (51) and said second connecting element (52) to said first control means (6),
wherein the information related to the operative conditions of said first connecting element (51) and said second connecting element (52) relate to whether the connectors (513, 514) of the first connecting element (51) are correctly coupled with the corresponding connectors (523, 524) of the second connecting element (52),
wherein the first control means (6) process the information transmitted by the first transceiver unit (515) and by the second transceiver unit (525) to implement suitable control strategies.

2. Power transfer system, according to claim 1, **characterized in that** said first and second connecting elements (51, 52) are electrically couplable by means of a removable coupling of the plug-socket type.

3. Power transfer system, according to one of the previous claims, **characterized in that** said first and second connecting elements (51, 52) directly couplable one with another.

4. Power transfer system, according to one of the claims from 1 to 2, **characterized in that** it said connection means (50) comprise an adapter element (53) having first and second coupling ports (531, 532), said first and second connecting elements (51, 52) being couplable with said first and second ports (531, 532), respectively.

5. Power transfer system, according to one of the previous claims, **characterized in that** said first transceiver unit (515) is capable of communicating in a wireless manner with said first control means (6).

6. Power transfer system, according to one of the previous claims, **characterized in that** said second transceiver unit (525) is capable of communicating in a wireless manner with said first control means (6) or with said first transceiver unit (515).

7. Power transfer system, according to one of the previous claims, **characterized in that**:
- said transmitter-side power sub-system (2) and said first control means (6) are arranged in a wall-box device for an electric vehicle charging facility;
- said transmitter-side coil sub-system (3) and said second control means (7) are arranged or embedded in a ground pad device for an electric vehicle charging facility;
- said receiver-side coil sub-system (4), said receiver-side power sub-system (5), said third control means (8) and said battery (200) are arranged on board said electric vehicle.

## Patentansprüche

1. System zur Stromübertragung (1) zum Austauschen von elektrischem Strom zwischen einem elektrischen Stromsystem (100) und einer Batterie (200) eines Elektrofahrzeugs, umfassend:
- ein senderseitiges Stromsubsystem (2), das mit dem elektrischen Stromsystem (100) elektrisch koppelbar und angepasst ist, um elektrischen Wechselstrom mit dem elektrischen Stromsystem auszutauschen;
- ein senderseitiges Spulensubsystem (3), das elektrisch mit dem senderseitigen Stromsubsystem gekoppelt und angepasst ist, um elektrischen Wechselstrom mit dem senderseitigen Stromsubsystem auszutauschen, wobei das senderseitige Spulensubsystem eine Senderspule (31) umfasst;
- ein empfängerseitiges Spulensubsystem (4), umfassend eine Empfängerspule (41), die induktiv mit der Senderspule (31) koppelbar ist, wobei das empfängerseitige Spulensubsystem angepasst ist, um elektrischen Wechselstrom mit dem senderseitigen Spulensubsystem (3) auszutauschen;
- ein empfängerseitiges Stromsubsystem (5), das elektrisch mit dem empfängerseitigen Spulensubsystem (4) gekoppelt ist und angepasst ist, um elektrischen Wechselstrom mit dem empfängerseitigen Spulensubsystem auszutauschen, wobei das empfängerseitige Stromsubsystem elektrisch mit der Batterie (200) koppelbar ist und angepasst ist, um elektrischen Gleichstrom mit der Batterie auszutauschen;
- ein erstes Steuermittel (6), das angepasst ist, um den Betrieb des senderseitigen Stromsubsystems (2) zu steuern, ein zweites Steuermittel (7), das angepasst ist, um den Betrieb des empfängerseitigen Spulensubsystems (4) zu steuern, einen ersten Kommunikationskanal (9) vom drahtlosen Typ zwischen dem ersten und dem zweiten Steuermittel (7);
- ein Verbindungsmittel (50), das angepasst ist, um das senderseitige Stromsubsystem (2) und das senderseitige Spulensubsystem (3) elektrisch zu koppeln,
**dadurch gekennzeichnet, dass** das Verbindungsmittel ein erstes und ein zweites Verbindungselement (51, 52) umfasst, die mittels einer lösbaren Kupplung des werkzeuglosen Typs elektrisch koppelbar sind,
wobei das erste Verbindungselement (51) eine erste Transceiver-Einheit (515) umfasst, die in der Lage ist, mit dem ersten Steuerungsmittel (6) zu kommunizieren, und eine erste Sensorelement-Anordnung (516), die operativ mit der ersten Transceiver-Einheit (515) gekoppelt ist, wobei die erste Sensoranordnung angepasst ist, um Erfassungssignale, die für die Betriebsbedingungen des ersten Verbindungselements kennzeichnend sind, an die erste Transceiver-Einheit (515) bereitzustellen,
wobei das zweite Verbindungselement (52) eine zweite Transceiver-Einheit (525) umfasst, die in der Lage ist, mit dem ersten Steuermittel (6) oder mit der ersten Transceiver-Einheit (515) des ersten Verbindungselements (51) zu kommunizieren, und eine zweite Erfassungsanordnung (526), die betriebsmäßig mit der zweiten Transceiver-Einheit (525) gekoppelt ist, wobei die zweite Erfassungsanordnung angepasst ist, um Erfassungssignale, die für die Betriebsbedingungen des zweiten Verbindungselements kennzeichnend sind, an die erste Transceiver-Einheit (515) bereitzustellen,
wobei die zweite Transceiver-Einheit (525) angepasst ist, um Informationen, die für die Betriebsbedingungen des senderseitigen Spulensubsystems (3) und des zweiten Verbindungselements kennzeichnend sind, zumindest an die erste Transceiver-Einheit (515) zu senden,
wobei die Informationen, die sich auf die Betriebsbedingungen des senderseitigen Spulensubsystems (3) beziehen, mindestens eines der folgenden Merkmale betreffen: elektrische Leistungsfähigkeit, Nennschaltfrequenz, maximal zulässiger Luftspalt zwischen der Senderspule und der Empfängerspule, maximal zulässige Fehlausrichtung zwischen der Senderspule und der Empfängerspule,
wobei die erste Transceiver-Einheit (515) angepasst ist, um Informationen, die für die Betriebsbedingungen des ersten Verbindungselements (51) und des zweiten Verbindungselements (52) kennzeichnend sind, an das erste Steuerungsmittel (6) zu senden,
wobei die Informationen, die sich auf die Betriebsbedingungen des ersten Verbindungselements (51) und des zweiten Verbindungselements (52) beziehen, sich darauf beziehen, ob die Verbinder (513, 514) des ersten Verbindungselements (51) korrekt mit den entsprechenden Verbindern (523, 524) des zweiten Verbindungselements (52) gekoppelt sind,
wobei das erste Steuerungsmittel (6) die durch die erste Transceiver-Einheit (515) und durch die zweite Transceiver-Einheit (525) gesendeten Informationen verarbeitet, um geeignete Steuerstrategien zu implementieren.

2. System zur Stromübertragung nach Anspruch 1, **dadurch gekennzeichnet, dass** die ersten und zweiten Verbindungselemente (51, 52) mit Mitteln einer lösbaren Kupplung vom Typ Stecker-Buchse elektrisch koppelbar sind.

3. System zur Stromübertragung nach einem der vorhergehenden Ansprüche, **dadurch gekennzeichnet, dass** die ersten und zweiten Verbindungselemente (51, 52) direkt miteinander koppelbar sind.

4. System zur Stromübertragung nach einem der Ansprüche 1 bis 2, **dadurch gekennzeichnet, dass** das Verbindungsmittel (50) ein Adapterelement (53) umfasst, das einen ersten und einen zweiten Kopplungsanschluss (531, 532) aufweist, wobei das erste und das zweite Verbindungselement (51, 52) mit dem ersten bzw. zweiten Anschluss (531, 532) koppelbar sind.

5. System zur Stromübertragung nach einem der vorhergehenden Ansprüche, **dadurch gekennzeichnet, dass** die erste Transceiver-Einheit (515) in der Lage ist, auf drahtlose Weise mit dem ersten Steuerungsmittel (6) zu kommunizieren.

6. System zur Stromübertragung nach einem der vorhergehenden Ansprüche, **dadurch gekennzeichnet, dass** die zweite Transceiver-Einheit (525) in der Lage ist, drahtlos mit dem ersten Steuermittel (6) oder mit der ersten Transceiver-Einheit (515) zu kommunizieren.

7. System zur Stromübertragung nach einem der vorhergehenden Ansprüche, **dadurch gekennzeichnet, dass**:
- das senderseitige Stromsubsystem (2) und das erste Steuerungsmittel (6) in einer Wandbox-Vorrichtung für eine Ladeeinrichtung für Elektrofahrzeuge angeordnet sind;
- das senderseitige Spulensubsystem (3) und das zweite Steuermittel (7) in einer Bodenkontaktvorrichtung für eine Ladevorrichtung für Elektrofahrzeuge angeordnet oder eingebettet sind;
das empfängerseitige Spulensubsystem (4), das empfängerseitige Stromsubsystem (5), das dritte Steuermittel (8) und die Batterie (200) an Bord des Elektrofahrzeugs angeordnet sind.

## Revendications

1. Système de transfert de puissance (1) pour échanger de l'énergie électrique entre un système d'alimentation électrique (100) et une batterie (200) d'un véhicule électrique comprenant :
- un sous-système de puissance côté émetteur (2) pouvant être couplé électriquement audit système d'alimentation électrique (100) et adapté à l'échange d'énergie électrique CA avec ledit système d'alimentation électrique ;
- un sous-système de bobine côté émetteur (3) couplé électriquement audit sous-système de puissance côté émetteur et adapté pour échanger de l'énergie électrique CA avec ledit sous-système de puissance côté émetteur, ledit sous-système de bobine côté émetteur comprenant une bobine d'émetteur (31) ;
- un sous-système de bobine côté récepteur (4) comprenant une bobine de récepteur (41) pouvant être couplée par induction à ladite bobine d'émetteur (31), ledit sous-système de bobine côté récepteur étant adapté pour échanger de l'énergie électrique CA avec ledit sous-système de bobine côté émetteur (3) ;
- un sous-système de puissance côté récepteur (5) couplé électriquement audit sous-système de bobine côté récepteur (4) et adapté pour échanger de 1 ' énergie électrique CA avec ledit sous-système de bobine côté récepteur, ledit sous-système de puissance côté récepteur pouvant être couplé électriquement à ladite batterie (200) et adapté pour échanger de l'énergie électrique CC avec ladite batterie ;
- un premier moyen de commande (6) adapté pour commander le fonctionnement dudit sous-système de puissance côté émetteur (2), un deuxième moyen de commande (7) adapté pour commander le fonctionnement dudit sous-système de bobine côté récepteur (4), un premier canal de communication (9) de type sans fil entre lesdits premier et deuxième moyens de commande (7) ;
- des moyens de connexion (50) adaptés pour coupler électriquement ledit sous-système de puissance côté émetteur (2) et ledit sous-système de bobine côté émetteur (3),
**caractérisé en ce que** lesdits moyens de connexion comprennent des premier et deuxième éléments de connexion (51, 52) pouvant être couplés électriquement au moyen d'un couplage amovible du type sans outil,
ledit premier élément de connexion (51) comprenant une première unité émettrice-réceptrice (515) capable de communiquer avec ledit premier moyen de commande (6) et un premier dispositif de détection (516) couplé de manière opérationnelle à ladite première unité émettrice-réceptrice (515), ledit premier dispositif de détection étant adapté pour fournir des signaux de détection indiquant les conditions de fonctionnement dudit premier élément de connexion à la première unité émettrice-réceptrice (515),
ledit deuxième élément de connexion (52) comprenant une deuxième unité émettrice-réceptrice (525) capable de communiquer avec ledit premier moyen de commande (6) ou avec ladite première unité émettrice-réceptrice (515) dudit premier élément de connexion (51) et un deuxième dispositif de détection (526) couplé de manière opérationnelle à ladite deuxième unité émettrice-réceptrice (525), ledit deuxième dispositif de détection étant adapté pour fournir des signaux de détection indiquant les conditions de fonctionnement dudit deuxième élément de connexion à la première unité émettrice-réceptrice (515),
ladite deuxième unité émettrice-réceptrice (525) étant adaptée pour transmettre des informations indiquant les conditions de fonctionnement dudit sous-système de bobine côté émetteur (3) et dudit deuxième élément de connexion au moins à ladite première unité émettrice-réceptrice (515),
les informations relatives aux conditions de fonctionnement du sous-système de bobine côté émetteur (3) concernant au moins l'un des éléments suivants : la capacité électrique, la fréquence de commutation nominale, l'entrefer maximal admis entre la bobine de l'émetteur et la bobine du récepteur, le désalignement maximal admis entre la bobine de l'émetteur et la bobine du récepteur,
ladite première unité émettrice-réceptrice (515) étant adaptée pour transmettre des informations indiquant les conditions de fonctionnement dudit premier élément de connexion (51) et dudit deuxième élément de connexion (52) audit premier moyen de commande (6),
les informations relatives aux conditions de fonctionnement dudit premier élément de connexion (51) et dudit deuxième élément de connexion (52) concernant le fait que les connecteurs (513, 514) du premier élément de connexion (51) sont correctement couplés avec les connecteurs correspondants (523, 524) du deuxième élément de connexion (52),
le premier moyen de commande (6) traitant les informations transmises par la première unité émettrice-réceptrice (515) et par la deuxième unité émettrice-réceptrice (525) pour mettre en œuvre des stratégies de commande appropriées.

2. Système de transfert de puissance, selon la revendication 1, **caractérisé en ce que** lesdits premier et deuxième éléments de connexion (51, 52) peuvent être électriquement couplés au moyen d'un couplage amovible du type prise mâle-femelle.

3. Système de transfert de puissance, selon l'une des revendications précédentes, **caractérisé en ce que** lesdits premier et deuxième éléments de connexion (51, 52) peuvent être directement couplés l'un à l'autre.

4. Système de transfert de puissance, selon l'une des revendications de 1 à 2, **caractérisé en ce que** lesdits moyens de connexion (50) comprennent un élément adaptateur (53) ayant un premier et un deuxième port de couplage (531, 532), lesdits premier et deuxième éléments de connexion (51, 52) pouvant être couplés avec lesdits premier et deuxième ports (531, 532), respectivement.

5. Système de transfert de puissance, selon l'une des revendications précédentes, **caractérisé en ce que** ladite première unité émettrice-réceptrice (515) est capable de communiquer de manière sans fil avec ledit premier moyen de commande (6).

6. Système de transfert de puissance, selon l'une des revendications précédentes, **caractérisé en ce que** ladite deuxième unité émettrice-réceptrice (525) est capable de communiquer de manière sans fil avec ledit premier moyen de commande (6) ou avec ladite première unité émettrice-réceptrice (515).

7. Système de transfert de puissance, selon l'une des revendications précédentes, **caractérisé en ce que**
- ledit sous-système de puissance côté émetteur (2) et ledit premier moyen de commande (6) sont agencés dans un dispositif de boîtier mural pour une installation de recharge de véhicule électrique ;
- ledit sous-système de bobine côté émetteur (3) et ledit deuxième moyen de commande (7) sont agencés ou intégrés dans un dispositif de plaque de sol pour une installation de recharge de véhicule électrique ;
- ledit sous-système de bobine côté récepteur (4), ledit sous-système de puissance côté récepteur (5), ledit troisième moyen de commande (8) et ladite batterie (200) sont agencés à bord dudit véhicule électrique.
